# EUROPÄISCHE PATENTSCHRIFT

(11) **EP 2 120 025 B1**
(45) Veröffentlichungstag und Bekanntmachung des Hinweises auf die Patenterteilung: **19.12.2012**
(21) Anmeldenummer: 09005334.9
(22) Anmeldetag: 14.04.2009
(51) Int. Cl.: G01J 1/04, B60S 1/08, B60R 1/00, G02B 3/08

(54) **Optische Sensorvorrichtung zur Detektion von Umgebungslicht**
Optical sensor device for detecting ambient light
Dispositif de capteur optique destiné à la détection de lumière ambiante

(30) Priorität: 16.05.2008 DE 102008023845
(43) Veröffentlichungstag der Anmeldung: 18.11.2009
(73) Patentinhaber: TRW Automotive Electronics & Components GmbH, 78315 Radolfzell (DE)
(72) Erfinder: Backes, Ulrich, Dr., 78315 Radolfzell (DE)
(74) Vertreter: Prinz & Partner

(56) Entgegenhaltungen:
- EP-A- 0 974 486
- DE-A1- 19 634 774
- DE-A1- 19 830 120
- DE-A1-102005 060 603
- JP-A- 4 147 019
- US-A1- 2007 235 638
- US-B1- 6 750 832

## Beschreibung

Die Erfindung betrifft eine optische Sensorvorrichtung zur Detektion von Umgebungslicht, die an eine Scheibe ankoppelbar ist, insbesondere an eine Windschutzscheibe eines Fahrzeugs.

Solche Sensorvorrichtungen werden hauptsächlich als Lichtsensoren zur Steuerung der Fahrzeugbeleuchtung eingesetzt. Die Verwendung klassischer Linsen zur Beeinflussung des Strahlengangs, wie z. B. die gegen die Windschutzscheibe geneigten Linsen des in der EP 1 068 112 B1 gezeigten Regensensors, benötigen einen verhältnismäßig großen Bauraum.

Kleinere Bauformen sind, wie z. B. aus der WO 03/026937 A1 bekannt, durch Verwendung holographischer Strukturen möglich. Diese Sensoren basieren auf dem Prinzip der Lichtbeugung mit Hilfe von diffraktiven Elementen und haben daher den prinzipbedingten Nachteil einer wesentlich geringeren Nutzlichtausbeute und einer höheren Störlichtempfindlichkeit.

Die DE 196 08 648 C1 schlägt bei einer optischen Sensorvorrichtung vor, die Lichteintritts- bzw. -austrittsflächen der Lichtleitereinheit als Fresnellinsen auszubilden. Da jedoch die Flächen des Lichtleiters, in denen die Linsen ausgebildet sind, senkrecht zu der Fläche der Scheibe stehen, ist der erforderliche Bauraum dieser Vorrichtung sehr groß.

Aus der US 2007/0235638 A1 ist eine optische Regensensorvorrichtung mit einer Sensoreinheit bekannt, die einen Sender, einen Empfänger sowie eine Lichtleiterstruktur mit einer dem Sender zugeordneten ersten Fresnellinse und einer dem Empfänger zugeordneten zweiten Fresnellinse aufweist. Die Fresnellinsen sind so angeordnet, dass ein vom Sender ausgestrahltes divergierendes Lichtbündel durch die erste Fresnellinse parallel ausgerichtet und als paralleles Lichtbündel ohne weitere wesentliche Ablenkung in die Scheibe eingekoppelt wird. Das parallele Lichtbündel wird nach wenigstens einer Reflexion in der Scheibe als paralleles Lichtbündel aus der Scheibe ausgekoppelt. Das Lichtbündel trifft durch die zweite Fresnellinse als konvergierendes Lichtbündel auf den Empfänger.

Die DE 198 30 120 A1 zeigt eine optoelektronische Regensensoreinrichtung mit einer Parallelisierungseinrichtung und einer Fokussiereinrichtung, die jeweils als segmentierte Linse ausgebildet und nebeneinander in einer Ebene liegend im Bereich der inneren Oberfläche der Scheibe angeordnet sind.

Die DE 196 34 774 A1 betrifft eine Klimaanlage für ein Fahrzeug mit einem Sonnenlichtsensor. Der Sonnenlichtsensor weist ein Filterelement auf, das einstückig mit einer Fresnellinse ausgebildet ist, die eine Brechung des einfallenden Sonnenlichts hervorruft, wenn der Elevationswinkel des Sonnenlichts klein ist.

Eine optische Sensorvorrichtung mit den Merkmalen des Oberbegriffs des Anspruchs 1 bzw. des Anspruchs 2 ist aus der JP 4-147019 A bekannt. Bei dieser Vorrichtung kommt eine Linsenplatte zum Einsatz mit einer Fresnelprismenstruktur, die auf der vom Lichtempfänger abgewandten Fläche der Linsenplatte gebildet ist, und einer Fresnellinsenstruktur, die auf der dem Lichtempfänger zugewandten Fläche der Linsenplatte gebildet ist.

Weitere grundsätzliche Nachteile bekannter optischer Umgebungslichtsensorvorrichtungen sind im hohen Herstellungsaufwand und in einem zu engen Empfangsbereich zu sehen. Der Versuch, bei Sensorvorrichtungen mit Fresnellinsen eine Aufweitung dadurch zu produzieren, daß der Lichtempfänger weiter oder näher zum Brennpunkt der Fresnellinse plaziert wird, scheitert an der damit einhergehenden Aufspaltung der Empfangscharakteristik in ein weiteres oder mehrere weitere Strahlenbündel weit außerhalb des vorgesehenen Empfangsbereichs. Gleiches gilt für den Versuch, die Empfängerfläche zu vergrößern.

Aufgabe der Erfindung ist es, den Empfangsbereich der Sensoreinheit unter Vermeidung der oben genannten Nachteile zu vergrößern.

Zur Lösung dieser Aufgabe wird eine optische Sensorvorrichtung zur Detektion von Umgebungslicht mit den Merkmalen des Anspruchs 1 bzw. der Anspruchs 2 vorgeschlagen. Die erfindungsgemäße Lösung ermöglicht es, den Empfangsbereich der Sensoreinheit mit nur einer Fresnelprismenstruktur definiert aufzuweiten, ohne daß eine Aufspaltung in mehrere Lichtbündel produziert wird. Um eine gewünschte Empfangscharakteristik zu erzielen, kann beispielsweise der Ablenkwinkel der reflektierenden Einzelstrukturen um einen mittleren Ablenkwinkel herum in kleinen Winkelabständen eingestellt werden.

Besonders vorteilhaft ist eine Weiterbildung der erfindungsgemäßen optischen Sensorvorrichtung, bei der die erste Fresnelprismenstruktur eine lineare Struktur mit einer ersten Ausrichtung ist und die Linsenplatte auf derselben Fläche eine zweite lineare Fresnelprismenstruktur mit mehreren Einzelstrukturen aufweist, wobei die zweite Fresnelprismenstruktur eine von der ersten Ausrichtung verschiedene zweite Ausrichtung hat. Auf diese Weise kann der durch die erfindungsgemäße Lösung aufgeweitete Empfangsbereich um einen von diesem unabhängigen weiteren Empfangsbereich in einer anderen Raumrichtung ergänzt werden.

Vorzugsweise ist die Ausrichtung der zweiten Fresnelprismenstruktur senkrecht zur Ausrichtung der ersten Fresnelprismenstruktur. Damit kann der Lichteinfall aus zwei maximal unterschiedlichen Richtungen berücksichtigt werden, was für die Zuverlässigkeit der Lichtdetektion von Bedeutung ist. Grundsätzlich sind aber auch andere Ausrichtungen möglich.

Die Einzelstrukturen der zweiten Fresnelprismenstruktur sind bevorzugt wie bei der ersten Fresnelprismenstruktur so ausgelegt, daß sie die Strahlen des leicht honvergierend in die Linsenplatte eingehoppelten Umgebungslichtbündels unter verschiedenen Winkeln ablenken, um dadurch den Empfangsbereich zu vergrößern.

Eine äußerst kompakte Sensoreinheit mit minimalem Herstellungsaufwand ergibt sich dadurch, daß die zweite Fresnelprismenstruktur wenigstens teilweise in die erste Fresnelprismenstruktur integriert ist. Die Einzelstrukturen haben in diesem Fall eine Doppelfunktion, indem sie für beide Fresnelprismenstrukturen gleichzeitig die notwendige Lichtablenkung vornehmen.

In einer vorteilhaften Ausführungsform eines Regen/Licht-Sensors ist neben der erfindungsgemäßen optischen Sensorvorrichtung für Umgebungslicht noch eine optischen Regensensorvorrichtung zur Erfassung von Benetzungsereignissen auf der Scheibe vorgesehen, wobei sich die Sensorvorrichtungen eine gemeinsame Linsenplatte teilen, in der alle Fresnelstrukturen (Prismen- und ggf. Linsenstrukturen) ausgebildet sind.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Schnittansicht einer Sensoreinheit einer erfindungsgemäßen optischen Sensorvorrichtung;
- Figur 2 eine Schnittansicht einer Sensoreinheit einer nicht-erfindungsgemä-βen optischen Sensorvorrichtung;
- Figur 3a eine vergrößerte Querschnittsansicht einer Fresnelprismenstruktur mit hauptsächlicher Umlenkung durch Reflektion;
- Figur 3b eine vergrößerte Querschnittsansicht einer Fresnelprismenstruktur mit hauptsächlicher Umlenkung durch Brechung;
- Figuren 4a bis 4d entsprechende Querschnittsansichten verschiedener Einzelstrukturen; und
- Figuren 5a und 5b perspektivische Ansichten der Fresnelprismenstruktur einer besonderen Ausführungsform;

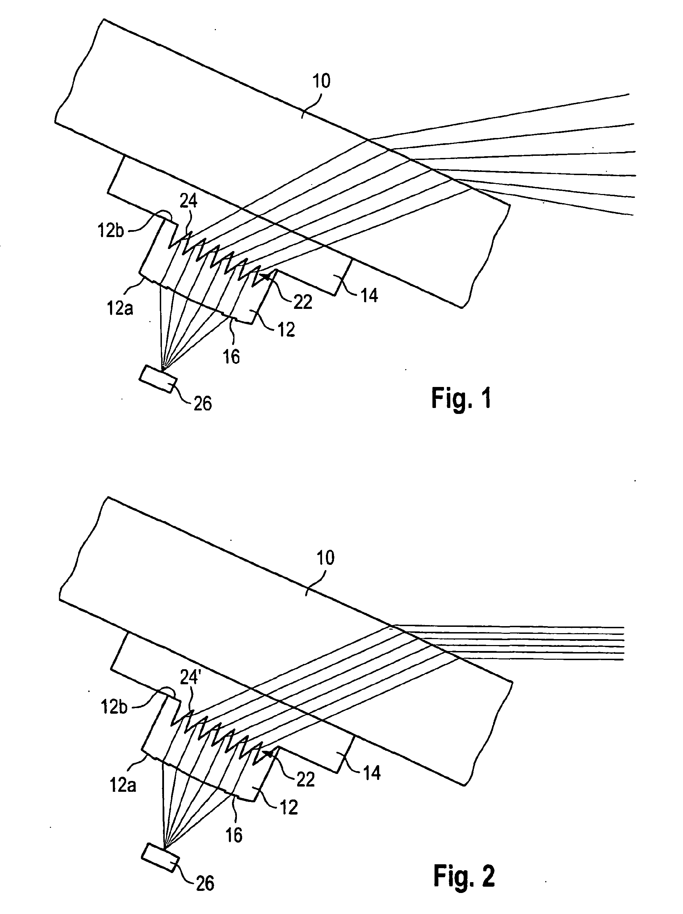

Eine Sensoreinheit für einen Umgebungslichtsensor für ein Fahrzeug ist in Figur 1 schematisch dargestellt. Die Sensoreinheit wird an der Windschutzscheibe 10 des Fahrzeugs angebracht. Das optisch aktive Element der Sensoreinheit ist eine Linsenplatte 12. Die Linsenplatte 12 ist an die Windschutzscheibe 10 mittels eines Kopplers 14 mechanisch und optisch angekoppelt.

Auf einer von der Windschutzscheibe 10 abgewandten ersten Fläche 12a ist die Linsenplatte 12 mit einer Fresnellinsenstruktur 16 versehen. Im Brennpunkt der Fresnellinsenstruktur befindet sich ein Lichtempfänger 26.

Auf einer der Windschutzscheibe 10 zugewandten zweiten Fläche 12b ist die Linsenplatte 12 in Gegenüberlage zu der Fresnellinsenstruktur 16 mit einer Fresnelprismenstruktur 22 versehen. Die Fresnelprismenstruktur 22 der zweiten Fläche 12b besteht aus mehreren prismenartigen Einzelstrukturen 24, die später genauer erläutert werden.

Ein im wesentlichen horizontal auf die geneigte Windschutzscheibe 10 auftreffendes Lichtbündel wird beim Eintritt in die Scheibe 10 schräg nach unten gebrochen. Das Lichtbündel wird ohne wesentliche Brechung durch den Koppler 14 aus der Windschutzscheibe 10 ausgekoppelt und trifft schräg zur Ebene der Linsenplatte 12 auf die Fresnelprismenstruktur 22. Das Lichtbündel wird durch die Fresnelprismenstruktur 22 so umgelenkt, daß es die Linsenplatte 12 als paralleles Lichtbündel senkrecht durchquert. Die Fresnellinsenstruktur 16 bündelt das Lichtbündel beim Austritt aus der Linsenplatte 12 auf den Lichtempfänger 26.

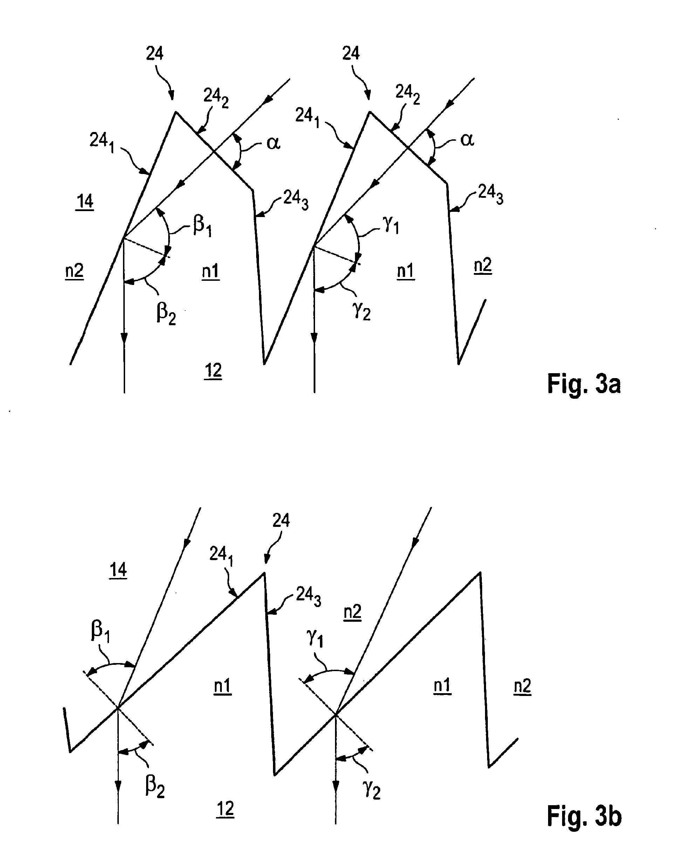

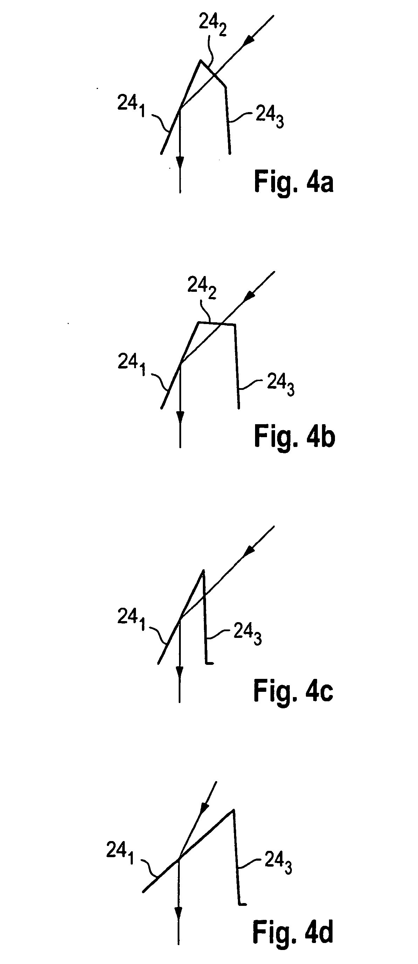

Eine Besonderheit der Fresnelprismenstruktur 22 liegt darin, daß im Vergleich zu einer nicht-erfindungsgemäßen Ausführung der Fresnelprismenstruktur, die in Figur 2 gezeigt ist, der Empfangsbereich der Sensoreinheit aufgeweitet ist. Während bei der in Figur 2 gezeigten Sensoreinheit die Einzelstrukturen 24' der Fresnelprismenstruktur 22 alle gleich ausgebildet sind, wird dementsprechend nur ein eng begrenztes paralleles Lichtbündel, das horizontal auf die Windschutzscheibe 10 trifft, auf den Lichtempfänger 26 fokussiert. Dagegen sind die Einzelstrukturen 24 bei der erfindungsgemäßen Ausführung der Fresnelprismenstruktur 22 so ausgelegt, daß sie das Lichtbündel unter verschiedenen Winkeln ablenken, wie nachfolgend anhand der Figuren 3a und 3b und 4a bis 4c erläutert wird. Dies führt dazu, daß, wie aus Figur 1 ersichtlich, der Empfangsbereich nicht auf ein paralleles Lichtbündel beschränkt ist, sondern auf ein bezüglich der Einfallsrichtung leicht konvergierendes Lichtbündel aufgeweitet ist.

Aus Figur 3a geht hervor, daß die prismenartigen Einzelstrukturen 24 der Fresnelprismenstruktur 22 im Querschnitt eine erste Flanke 24₁ aufweisen, die sich durchgehend gerade vom Grund bis zum Scheitel erstreckt; eine zweite Flanke besteht aus zwei Abschnitten 24₂ und 24₃. Der Abschnitt 24₂ der zweiten Flanke (rechts in Figur 3a) ist weniger steil als der zweite Abschnitt 24₃, der auch steiler ist als die Flanke 24₁. Die Brechungsindizes n1 und n2 der Materialien, aus denen die Linsenplatte 12 bzw. der Koppler 14 bestehen, sind sorgfältig aufeinander abgestimmt (sie unterscheiden sich nur wenig voneinander).

Der Einfachheit halber wird im folgenden jeweils ein einzelner Lichtstrahl eines im wesentlichen horizontal orientierten Umgebungslichtbündels betrachtet, das in die Windschutzscheibe 10 eingetreten ist und nach Durchquerung des Kopplers 14 auf die Linsenplatte 12 trifft.

Der gemäß der linken Hälfte der Figur 3a unter einem Eintrittswinkel von α = 90° auf den Abschnitt 24₂ auftreffende Lichtstrahl tritt ohne Brechung in die Einzelstruktur 24 ein und wird innerhalb der Einzelstruktur 24 von der Flanke 24₁ totalreflektiert. Bedingung für die Totalreflexion des Lichtstrahls an der Flanke 24₁ ist, daß der Einfallswinkel β₁ größer ist als der Arcussinus des Verhältnisses der Brechungsindizes. Da das Verhältnis der Brechungsindizes nur wenig von 1 verschieden ist, muß der Einfallswinkel β₁ relativ groß sein (flacher Lichteinfall). Die Winkel an den Flanken der Einzelstrukturen 24 sind so aufeinander abgestimmt, daß der Ausfallwinkel β₂ (der gemäß den Gesetzen der Totalreflexion gleich dem Einfallswinkel β₁ ist) genau so groß ist, daß der Strahl die Linsenplatte 12 senkrecht durchquert (siehe Figur 1).

Der gemäß der rechten Hälfte der Figur 3a ebenfalls unter einem Eintrittswinkel von α = 90° auf den Abschnitt 24₂ der benachbarten Einzelstruktur 24 auftreffenden Lichtstrahl hat im wesentlichen den gleichen Verlauf wie der zuvor beschriebene Lichtstrahl. Auch dieser Strahl wird also so abgelenkt, daß er die Linsenplatte 12 senkrecht durchquert. Allerdings ist die Gestaltung dieser Einzelstruktur 24, insbesondere deren Flanke 24₁ und Flankenabschnitt 24₂, so gewählt, daß die oben beschriebenen Voraussetzungen für eine solche Ablenkung für einen Lichtstrahl gelten, dessen Verlauf vor dem Auftreffen auf die Windschutzscheibe 10 nicht ganz parallel zu dem des in der linken Hälfte der Figur 3a gezeigten Lichtstrahls ist. Die Einzelstrukturen 24 unterscheiden sich also hinsichtlich des Winkels zwischen dem aus dem Koppler 14 austretenden und dem die Linsenplatte 12 senkrecht durchquerenden Strahlabschnitt, der bei der Gestaltung der Einzelstrukturen 24 gemäß Figur 3a gleich der Summe aus Einfallswinkel und Ausfallwinkel β₁+β₂ bzw. γ₁+ γ₂ ist. Das heißt aber nicht, daß die Ablenkwinkel *aller* Einzelstrukturen 24 unterschiedlich sein müssen.

Figur 3b zeigt eine Ausgestaltung mit einer rein brechenden Fresnelprismenstruktur. Die prismenartigen Einzelstrukturen 24 der Fresnelprismenstruktur 22 weisen im Querschnitt eine erste Flanke 24₁ auf, an der ein einfallender Lichtstrahl nur durch Brechung (ohne weitere Reflexion) abgelenkt wird. Bei der zweiten Flanke entfällt der Zwischenabschnitt 24₂, was vor allem bei größeren Brechungsindexunterschieden vorteilhaft ist. Der oben definierte Ablenkwinkel beträgt hier (gemäß der Darstellung in Figur 3b) 180°+ β₂ - β₁ bzw. 180°+ γ₂ - γ₁, wobei β₁ und γ₁ die Einfallswinkel und β₂ und γ₂ die Brechungswinkel sind.

Grundsätzlich sind auch andere Ausgestaltungen der Einzelstrukturen 24 möglich, wie beispielhaft in den Figuren 4a bis 4d gezeigt ist. Bei den Ausführungen gemäß Figur 4b und 4c tritt im Gegensatz zur Ausführung gemäß Figur 4a eine Lichtbrechung beim Eintritt in die Einzelstruktur 24 (am Flankenabschnitt 24₂) auf, was unter Umständen von Vorteil sein kann. Bei den Ausführung gemäß den Figuren 4c und 4d entfällt der Abschnitt 24₂ der zweiten Flanke. Gemäß Figur 4c wird der Lichtstrahl an der zweiten Flanke gebrochen und an der ersten Flanke 24₁ reflektiert, während gemäß Figur 4d der Lichtstrahl nur an der ersten Flanke 24₁ gebrochen wird. Auch eine im wesentlichen symmetrische Gestaltung gerader Flanken (gleiche Neigung bezüglich der Ebene der Windschutzscheibe 10 oder der Linsenplatte 12 innerhalb eines üblichen Toleranzbereichs und unter Berücksichtigung der Unterschiede in den Brechungsindizes der Linsenplatte 12 und des Kopplers 14) ist möglich, ebenso wie eine Kombination verschiedener Einzelstrukturen 24 innerhalb der Fresnelprismenstruktur 22. Wichtig ist in jedem Fall, daß das zuvor leicht konvergierende Lichtbündel durch die Fresnelprismenstruktur 22 insgesamt zu einem parallelen Lichtbündel umgewandelt wird.

Es hat sich gezeigt, daß mit einer Variation um einen mittleren Ablenkwinkel, der einen horizontal auf die Windschutzscheibe 10 auftreffenden Lichtstrahl die Linsenplatte 12 senkrecht durchqueren läßt, eine vorteilhafte Empfangscharakteristik erzielt wird. Das auf diese Weise vom Lichtempfänger 24 erfaßte, vor der Ablenkung durch die Fresnelprismenstruktur 22 nicht ganz parallele Umgebungslichtbündel ist in Figur 1 dargestellt. Je nach Auslegung der Fresnellinsenstruktur 16 kann auch ein nicht-senkrechter Verlauf des parallelen Lichtbündels durch die Linsenplatte 12 eingestellt sein.

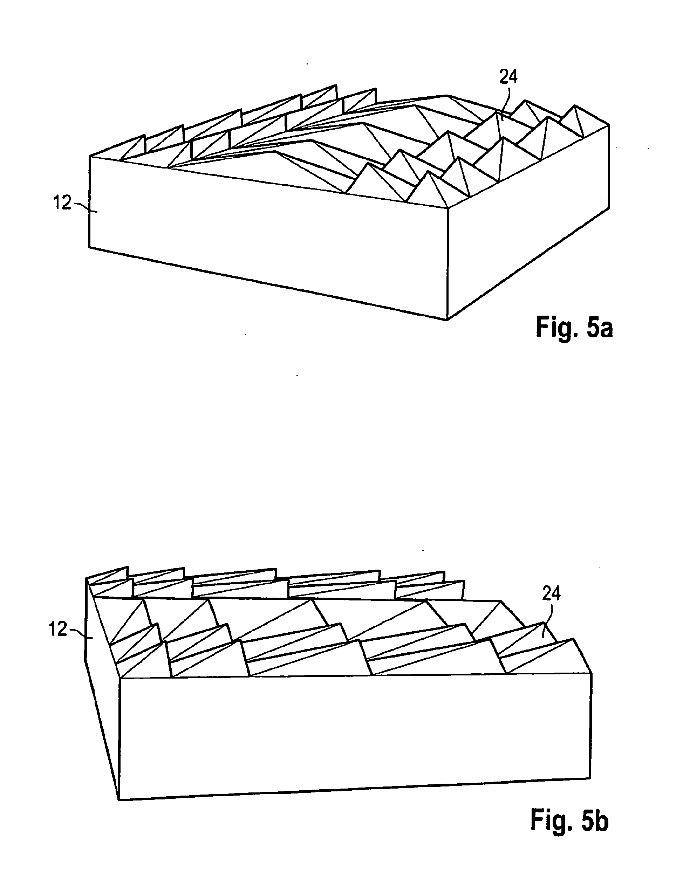

Gemäß der Darstellung der Figur 1 ist die Fresnelprismenstruktur 22 eine lineare Struktur mit einer bestimmten Ausrichtung, die durch die grundsätzliche Richtung des auf den Lichtempfänger 26 abgebildeten Lichtbündels bestimmt ist. Aus der Darstellung der Figuren 5a und 5b geht jedoch hervor, daß die Fresnelprismenstruktur 22 nicht nur eine erste lineare Struktur mit einer ersten Ausrichtung umfaßt, sondern zusätzlich eine zweite lineare Struktur mit einer von der ersten Ausrichtung verschiedenen zweiten Ausrichtung. Im dargestellten Ausführungsbeispiel ist die zweite Fresnelprismenstruktur in die erste Fresnelprismenstruktur integriert, d. h. die Einzelstrukturen 24 sind so dreidimensional gestaltet, daß sie auch ein aus einer anderen Raumrichtung auf die Windschutzscheibe 10 auftreffendes Lichtbündel so ablenken, daß es die Linsenplatte 12 senkrecht durchquert und beim Austritt aus der Linsenplatte 12 durch die Fresnellinsenstruktur 16 auf den Lichtempfänger 26 gebündelt wird. Die Ausrichtung der zweiten Fresnelprismenstruktur ist senkrecht zur Ausrichtung der ersten Fresnelprismenstruktur, es sind grundsätzlich aber auch andere Ausrichtungen möglich. Auch die zweite Fresnelprismenstruktur ist bezüglich der Einzelstrukturen 24 vorzugsweise so ausgelegt, daß diese die Strahlen des Lichtbündels unter leicht verschiedenen Winkeln ablenken.

Für die einwandfreie Funktion der Sensoreinheit ist es notwendig, daß das Material des Kopplers 14 formschlüssig und ohne Einschluß von Luftblasen oder dergleichen an der Fläche der Prismenstruktur 22 anliegt.

In der Praxis werden kombinierte Regen/Licht-Sensoren benötigt. Ein Regensensor enthält eine Anzahl von Sensoreinheiten, die ebenso wie die Sensoreinheit des beschriebenen Umgebungslichtsensors aktive optische Strukturen erfordern. Der besondere Aufbau des Umgebungslichtsensors erlaubt es, daß sich die Sensoreinheiten des Umgebungslichtsensors und des Regensensors eine gemeinsame Linsenplatte 12 teilen können, so daß sich ein minimaler Bauraum ergibt. Bei Bedarf können außerdem weitere Sensoreinheiten vorgesehen sein, die Licht aus verschiedenen Richtungen empfangen und/oder unterschiedliche Empfangscharakteristiken aufweisen.

Die Herstellung der Linsenplatte 12 kann in herkömmlicher Spritzgußtechnik erfolgen. Alternativ kommt eine Prägetechnik zum Einsatz.

Zur Vermeidung von Fehlfunktionen durch unerwünschte Lichteinkopplung (beispielsweise könnte Störlicht über Umwege auf den Lichtempfänger 26 treffen) kann wenigstens ein Teil der optisch nicht aktiven Flächen der Linsenplatte 12 mit Brechungs- oder Reflexionsstrukturen, z. B. Retroreflektorelementen (sog. "Katzenaugen"), versehen sein. Dadurch wird Licht, das nicht an den optisch aktiven Flächen auftrifft, in "unschädliche" Richtungen umgelenkt. Alternativ oder zusätzlich kann der optisch nicht aktive Bereich auf einer oder beiden Seiten mit einer lichtundurchlässigen Bedruckung versehen sein.

## Patentansprüche

1. Optische Sensorvorrichtung zur Detektion von Umgebungslicht mit einer Scheibe (10) und mit einer wenigstens einen Lichtempfänger (26) und eine Linsenplatte (12) aufweisenden Sensoreinheit, mit der ein in die Scheibe (10) eingetretenes Umgebungslichtbündel aus der Scheibe (10) ausgekoppelt und auf den Lichtempfänger (26) gelenkt wird, wobei die Linsenplatte (12) auf einer dem Lichtempfänger (26) zugewandten Fläche (12a) eine Fresnellinsenstruktur (16) und auf einer vom Lichtempfänger (26) abgewandten Fläche (12b) eine erste Fresnelprismenstruktur (22) mit mehreren Einzelstrukturen (24) aufweist, wobei die Linsenplatte (12) mittels eines formschlüssig an die Fresnelprismenstruktur (22) anliegenden Kopplers formschlüssig an die Scheibe (10) gekoppelt ist und wobei die Einzelstrukturen (24) derart unterschiedlich ausgebildet sind, daß sie die Lichtstrahlen eines leicht konvergierend in die Linsenplatte (12) eingekoppelten Umgebungslichtbündels unter solch verschiedenen Winkeln umgelenkt werden, dass sie die Linsenplatte (12) als paralleles Lichtbündel senkrecht durchqueren, wobei die Einzelstrukturen (24) im Querschnitt allgemein sägezahnförmig sind, mit zweiten Flanken (24₂, 24₃), die aus zwei Abschnitten mit unterschiedlicher Steigung bestehen, und an denen ein Teil des leicht konvergierenden Umgebungslichtbündels eintritt, und ersten Flanken (24₁), die sich durchgehend gerade vom Grund bis zum Scheitel erstrecken, und an denen Totalreflexion auftritt, wobei der Winkel zwischen den Flanken (24₁, 24₂) einer Einzelstruktur (24) vom entsprechenden Winkel einer benachbarten Einzelstruktur (24) abweicht, und wobei die Fresnellinsenstruktur (16) das die Linsenplatte 12 senkrecht durchquerende Lichtbündel in ein konvergierendes Lichtbündel umformt.

2. Optische Sensorvorrichtung zur Detektion von Umgebungslicht mit einer Scheibe (10) und mit einer wenigstens einen Lichtempfänger (26) und eine Linsenplatte (12) aufweisenden Sensoreinheit, mit der ein in die Scheibe (10) eingetretenes Umgebungslichtbündel aus der Scheibe (10) ausgekoppelt und auf den Lichtempfänger (26) gelenkt wird, wobei die Linsenplatte (12) auf einer dem Lichtempfänger (26) zugewandten Fläche (12a) eine Fresnellinsenstruktur (16) und auf einer vom Lichtempfänger (26) abgewandten Fläche (12b) eine erste rein brechende Fresnelprismenstruktur (22) mit mehreren Einzelstrukturen (24) aufweist, wobei die Linsenplatte (12) mittels eines formschlüssig an die Fresnelprismenstruktur (22) anliegenden Kopplers formschlüssig an die Scheibe (10) gekoppelt ist und wobei die Einzelstrukturen (24) derart unterschied-lich ausgebildet sind, daß sie die Lichtstrahlen eines leicht konvergierend in die Linsenplatte (12) eingekoppelten Umgebungslichtbündels unter solch verschiedenen Winkeln umgelenkt werden, dass sie die Linsenplatte (12) als paralleles Lichtbündel senkrecht durchqueren, wobei die Einzelstrukturen (24) im Querschnitt allgemein sägezahnförmig sind, und aus ersten Flanken (24₁), an denen eine Lichtbrechung unter verschiedenen Winkeln erfolgt, und zweiten Flanken (24₃) bestehen, wobei der Winkel zwischen den Flanken (24₁, 24₂) einer Einzelstruktur (24) vom entsprechenden Winkel einer benachbarten Einzelstruktur (24) abweicht, und wobei die Fresnellinsenstruktur (16) das die Linsenplatte 12 senkrecht durchquerende Lichtbündel in ein konvergierendes Lichtbündel umformt.

3. Optische Sensorvorrichtung nach Anspruch 1 oder 2, **dadurch gekennzeichnet, daß** die erste Fresnelprismenstruktur (22) eine lineare Struktur mit einer ersten Ausrichtung ist und daß die Linsenplatte (12) auf derselben Fläche (12b) eine zweite lineare Fresnelprismenstruktur mit mehreren Einzelstrukturen (24) aufweist, wobei die zweite Fresnelprismenstruktur eine von der ersten Ausrichtung verschiedene zweite Ausrichtung hat.

4. Optische Sensorvorrichtung nach Anspruch 3, **dadurch gekennzeichnet, daß** die Ausrichtung der zweiten Fresnelprismenstruktur senkrecht zur Ausrichtung der ersten Fresnelprismenstruktur (22) ist.

5. Optische Sensorvorrichtung nach Anspruch 3 oder 4, **dadurch gekennzeichnet, daß** die Einzelstrukturen (24) der zweiten Fresnelprismenstruktur so ausgelegt sind, daß sie Strahlen des leicht konvergierend in die Linsenplatte (12) eingekoppelten Umgebungslichtbündels unter verschiedenen Winkeln ablenken.

6. Optische Sensorvorrichtung nach einem der Ansprüche 3 bis 5, **dadurch gekennzeichnet, daß** die zweite Fresnelprismenstruktur wenigstens teilweise in die erste Fresnelprismenstruktur (22) integriert ist.

7. Optische Sensorvorrichtung nach einem der vorhergehenden Ansprüche, **dadurch gekennzeichnet, daß** sie eine Anzahl von Sensoreinheiten aufweist, die eine gemeinsame Linsenplatte (12) haben.

8. Regen/Licht-Sensor, **gekennzeichnet durch** eine optische Sensorvorrichtung nach einem der vorhergehenden Ansprüche kombiniert mit einer optischen Regensensorvorrichtung, wobei die Sensorvorrichtungen eine gemeinsame Linsenplatte (12) haben.

## Claims

1. An optical sensor device for detecting ambient light, comprising a pane (10) and a sensor unit which includes at least one light receiver (26) and a lens plate (12) and by means of which an ambient light beam having entered the pane (10) is coupled out of the pane (10) and directed onto the light receiver (26), the lens plate (12) including a Fresnel lens structure (16) on a surface (12a) which faces the light receiver (26) and a first Fresnel prism structure (22) on a surface (12b) which faces away from the light receiver (26), the first Fresnel prism structure (22) having a plurality of individual structures (24), the lens plate (12) being coupled to the pane (10) in a form-fitting manner by means of a coupler which contacts the Fresnel prism structure (22) in a form-fitting manner, and the individual structures (24) being configured so differently that the light rays of an ambient light beam that is coupled slightly convergingly into the lens plate (12) are deflected at such different angles that they pass perpendicularly through the lens plate (12) as a parallel light beam, the individual structures (24) being generally sawtooth-shaped in cross-section, having second flanks (24₂, 24₃) which consist of two sections with different inclinations and at which part of the slightly converging ambient light beam enters, and first flanks (24₁) which extend continuously straight from the base to the apex and at which total reflection occurs, the angle between the flanks (24₁, 24₂) of an individual structure (24) deviating from the corresponding angle of an adjacent individual structure (24), and the Fresnel lens structure (16) reshaping the light beam that passes perpendicularly through the lens plate (12) into a converging light beam.

2. An optical sensor device for detecting ambient light, comprising a pane (10) and a sensor unit which includes at least one light receiver (26) and a lens plate (12) and by means of which an ambient light beam having entered the pane (10) is coupled out of the pane (10) and directed onto the light receiver (26), the lens plate (12) including a Fresnel lens structure (16) on a surface (12a) which faces the light receiver (26) and a first, purely refracting Fresnel prism structure (22) on a surface (12b) which faces away from the light receiver (26), the first Fresnel prism structure (22) having a plurality of individual structures (24), the lens plate (12) being coupled to the pane (10) in a form-fitting manner by means of a coupler which contacts the Fresnel prism structure (22) in a form-fitting manner, and the individual structures (24) being configured so differently that the light rays of an ambient light beam that is coupled slightly convergingly into the lens plate (12) are deflected at such different angles that they pass perpendicularly through the lens plate (12) as a parallel light beam, the individual structures (24) being generally sawtooth-shaped in cross-section and consisting of first flanks (24₁) at which a refraction of light occurs at different angles, and second flanks (24₃), the angle between the flanks (24₁, 24₂) of an individual structure (24) deviating from the corresponding angle of an adjacent individual structure (24), and the Fresnel lens structure (16) reshaping the light beam that passes perpendicularly through the lens plate (12) into a converging light beam.

3. The optical sensor device according to claim 1 or 2, **characterized in that** the first Fresnel prism structure (22) is a linear structure having a first orientation, and **in that** on the same surface (12b), the lens plate (12) includes a second linear Fresnel prism structure having a plurality of individual structures (24), the second Fresnel prism structure having a second orientation which differs from the first orientation.

4. The optical sensor device according to claim 3, **characterized in that** the orientation of the second Fresnel prism structure is perpendicular to the orientation of the first Fresnel prism structure (22).

5. The optical sensor device according to claim 3 or 4, **characterized in that** the individual structures (24) of the second Fresnel prism structure are designed such that they deflect rays of the ambient light beam at different angles, the ambient light beam being coupled slightly convergingly into the lens plate (12).

6. The optical sensor device according to any of claims 3 to 5, **characterized in that** the second Fresnel prism structure is at least partially integrated in the first Fresnel prism structure (22).

7. The optical sensor device according to any of the preceding claims, **characterized in that** it includes a number of sensor units which have a common lens plate (12).

8. A rain/light sensor, **characterized by** an optical sensor device according to any of the preceding claims combined with an optical rain sensor device, the sensor devices having a common lens plate (12).

## Revendications

1. Dispositif de capteur optique pour la détection de lumière ambiante, comportant une vitre (10) et une unité de capteur présentant au moins un récepteur de lumière (26) et une plaque de lentille (12), au moyen de laquelle un faisceau de lumière ambiante entré dans la vitre (10) est découplé de la vitre (10) et est guidé sur le récepteur de lumière (26), la plaque de lentille (12) présentant sur une face (12a) tournée vers le récepteur de lumière (26) une structure de lentille de Fresnel (16), et sur une face (12b) détournée du récepteur de lumière (26) une première structure de prisme de Fresnel (22) comportant plusieurs structures individuelles (24), la plaque de lentille (12) étant couplée par coopération de formes à la vitre (10) au moyen d'un coupleur reposant sur la structure de prisme de Fresnel (22) par coopération de formes, et les structures individuelles (24) étant réalisées de manières différentes de sorte que les rayons lumineux d'un faisceau de lumière ambiante couplé dans la plaque de lentille (12) de façon légèrement convergente sont déviés sous des angles qui diffèrent de telle manière qu'ils traversent la plaque de lentille (12) perpendiculairement sous forme de faisceau lumineux parallèle, les structures individuelles (24) étant en section transversale généralement en forme de dents de scie, comportant deux flancs (24₂, 24₃) composés de deux tronçons qui présentent des pentes différentes et au niveau desquels une partie du faisceau de lumière ambiante légèrement convergent entre, ainsi que des premiers flancs (24₁) qui s'étendent continuellement en ligne droite depuis la base jusqu'au sommet et au niveau desquels il survient une réflexion totale, l'angle entre les flancs (24₁, 24₂) d'une structure individuelle (24) étant différent de l'angle correspondant d'une structure individuelle (24) adjacente, et la structure de lentille de Fresnel (16) convertissant le faisceau lumineux traversant la plaque de lentille (12) de manière perpendiculaire en un faisceau lumineux convergent.

2. Dispositif de capteur optique pour la détection de lumière ambiante, comportant une vitre (10) et une unité de capteur présentant au moins un récepteur de lumière (26) et une plaque de lentille (12), au moyen de laquelle un faisceau de lumière ambiante entré dans la vitre (10) est découplé de la vitre (10) et est guidé sur le récepteur de lumière (26), la plaque de lentille (12) présentant sur une face (12a) tournée vers le récepteur de lumière (26) une structure de lentille de Fresnel (16), et sur une face (12b) détournée du récepteur de lumière (26) une première structure de prisme de Fresnel (22) purement réfractive comportant plusieurs structures individuelles (24), la plaque de lentille (12) étant couplée par coopération de formes à la vitre (10) au moyen d'un coupleur reposant sur la structure de prisme de Fresnel (22) par coopération de formes, et les structures individuelles (24) étant réalisées de manières différentes de sorte que les rayons lumineux d'un faisceau de lumière ambiante couplé dans la plaque de lentille (12) de façon légèrement convergente sont déviés sous des angles qui diffèrent de telle manière qu'ils traversent la plaque de lentille (12) perpendiculairement sous forme de faisceau lumineux parallèle, les structures individuelles (24) étant en section transversale généralement en forme de dents de scie et étant composées de premiers flancs (24₁) au niveau desquels une réfraction est réalisée sous différents angles, et de deuxièmes flancs (24₃), l'angle entre les flancs (24₁, 24₂) d'une structure individuelle (24) étant différent de l'angle correspondant d'une structure individuelle (24) adjacente, et la structure de lentille de Fresnel (16) convertissant le faisceau lumineux traversant la plaque de lentille (12) de manière perpendiculaire en un faisceau lumineux convergent.

3. Dispositif de capteur optique selon la revendication 1 ou 2, **caractérisé en ce que** la première structure de prisme de Fresnel (22) est une structure linéaire avec une première orientation, et **en ce que** la plaque de lentille (12) présente sur la même face (12b) une deuxième structure de prisme de Fresnel linéaire qui comporte plusieurs structures individuelles (24), la deuxième structure de prisme de Fresnel présentant une deuxième orientation qui est différente de la première orientation.

4. Dispositif de capteur optique selon la revendication 3, **caractérisé en ce que** l'orientation de la deuxième structure de prisme de Fresnel est perpendiculaire à l'orientation de la première structure de prisme de Fresnel (22).

5. Dispositif de capteur optique selon la revendication 3 ou 4, **caractérisé en ce que** les structures individuelles (24) de la deuxième structure de prisme de Fresnel sont réalisées de manière à dévier des rayons du faisceau de lumière ambiante couplé dans la plaque de lentille (12) de façon légèrement convergente sous différents angles.

6. Dispositif de capteur optique selon l'une des revendications 3 à 5, **caractérisé en ce que** la deuxième structure de prisme de Fresnel est au moins partiellement intégrée dans la première structure de prisme de Fresnel (22).

7. Dispositif de capteur optique selon l'une des revendications précédentes, **caractérisé en ce qu'**il comporte un nombre d'unités de capteurs présentant une plaque de lentille (12) commune.

8. Capteur de pluie/de lumière, **caractérisé par** un dispositif de capteur optique selon l'une des revendications précédentes, combiné avec un dispositif de capteur de pluie optique, les dispositifs de capteurs présentant une plaque de lentille (12) commune.
